# EUROPÄISCHE PATENTANMELDUNG

(11) **EP 3 964 536 A1**
(43) Veröffentlichungstag der Anmeldung: **09.03.2022**
(21) Anmeldenummer: 21158619.3
(22) Anmeldetag: 23.02.2021
(51) Int. Cl.: C08G 18/00, C08G 18/76

(54) **POLYOXAZOLIDINON ZWISCHENPRODUKT ENTHALTEND EIN ANTIOXIDANS**

(71) Anmelder: BASF SE, 67056 Ludwigshafen am Rhein (DE)
(72) Erfinder: QUELL, Aggeliki, 67056 Ludwigshafen (DE)
(74) Vertreter: BASF IP Association

(57) **Zusammenfassung**

Gegenstand der vorliegenden Erfindung ist ein Zwischenprodukt für die Herstellung von Formteilen, bestehend aus einer Zubereitung, die ein thermoplastisches Polymer enthält, das das Reaktionsprodukt mindestens der folgenden Strukturkomponenten (i) und (ii) ist:
i) einer Polyisocyanat-Zusammensetzung, die mindestens ein Diisocyanat enthält;
ii) einer Epoxidzusammensetzung, die mindestens ein Diepoxid umfasst;
wobei die Reaktion in Gegenwart eines Antioxidationsmittels (iii) stattfindet, die Verwendung des Zwischenproduktes und das zugehörige Herstellungsverfahren.

## Beschreibung

Die vorliegende Erfindung bezieht sich auf ein Polyoxazolidinon-Zwischenprodukt, das ein Antioxidationsmittel enthält, dessen Verwendung und das zugehörige Herstellungsverfahren.

### Stand der Technik

Die Herstellung von Polyoxazolidinonen auf Basis von Diisocyanaten und Diepoxiden ist prinzipiell bekannt und z.B. in der WO 2018/167228, WO 2019/063391, oder WO2020/016276 beschrieben.

Verbesserte Herstellungsbedingungen durch Verwendung geeigneter Katalysatoren beschreiben beispielsweise EP2018/053612 oder EP2018/053612.

Polyoxazolidinon ist thermoplastisch und wird daher vorzugsweise in Form von Pellets oder Pulver, auch als Zwischenprodukt bezeichnet, an einen Kunden geliefert. Dieses Zwischenprodukt wird beim Kunden erhitzt und dann zum Endprodukt geformt. Ein Problem der Polyoxazolidinone ist der Anstieg der Viskosität bei der Formung des Endproduktes, was diesen Produktionsschritt für den Kunden zu einer Herausforderung macht und sich negativ auf die Transportvorrichtungen für die Schmelze und die Formvorrichtung auswirkt.

Die Aufgabe der vorliegenden Erfindung bestand daher darin das Problem des Viskositätsanstiegs der mit der Verarbeitung des Polyoxazolidinon-Zwischenproduktes, d.h. dem Granulat oder Pulver, zum Formteil zu reduzieren. Dabei sollten die sonstigen Materialeigenschaften der Polyoxazolidinone nicht wesentlich nachteilig beeinflusst werden.

Überraschenderweise konnte das Problem des Viskositätsanstiegs bei der Verarbeitung durch Zugabe eines Antioxidationsmittels zu dem Polyoxazolidinons gelöst werden.

### Figuren

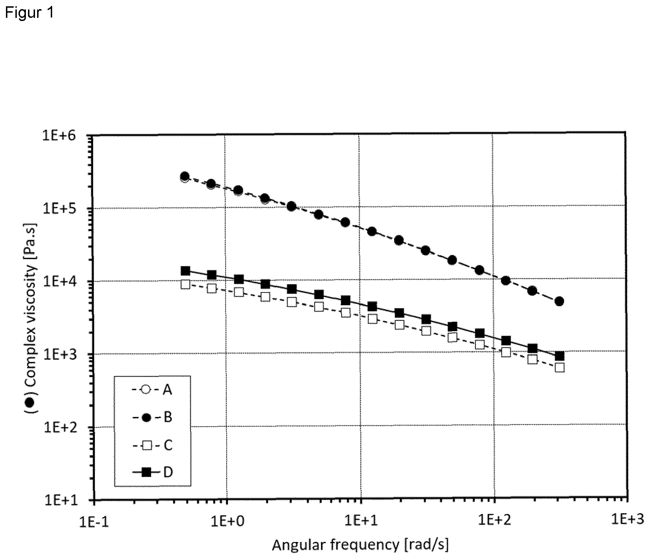

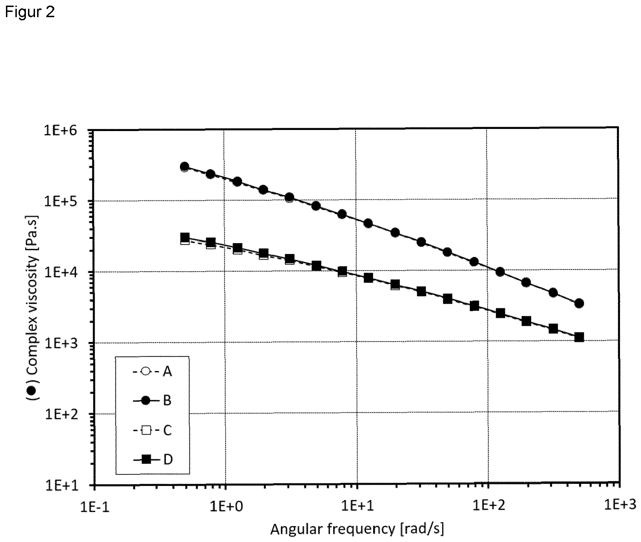

Die Figuren 1 und 2 zeigen die komplexe Viskosität zweier Polyoxazolidinone, Figur 1 ohne Antioxidationsmittel und Figur 2 mit Antioxidationsmittel. Details hierzu sind in Beispiel 5 ausgeführt.

### Detaillierte Beschreibung der Erfindung

Ein Gegenstand der vorliegenden Erfindung ist und Ausführungsform 1 ist ein Zwischenprodukt für die Herstellung von Formkörpern, bestehend aus einer Zubereitung, die ein thermoplastisches Polymer enthält, das das Reaktionsprodukt von mindestens den folgenden Strukturkomponenten (i) und (ii) ist:
i) einer Polyisocyanatzusammensetzung, die mindestens ein Diisocyanat umfasst;
ii) einer Epoxidzusammensetzung, die mindestens ein Diepoxid enthält;
wobei die Reaktion in Gegenwart eines Antioxidationsmittels (iii) stattfindet. Das Reaktionsprodukt wird auch als Polyoxazolidinon angesprochen. Die Zugabe des Antioxidationsmittels bereits bei der Synthese hat den Vorteil, dass dadurch der Viskositätsanstieg in weiteren Verarbeitungsschritten, bei denen das Polyoxazolidinon erhitzt wird, verringert wird. Solche Verarbeitungsschritte sind insbesondere Spritzgießen, Kalandrieren, Folienherstellung, Aufschäumen oder Pulversintern,

Zwischenprodukt bedeutet, dass das Polyoxazolidinon in einer Form vorliegt, die zum leichten Transport und zur leichten Weiterverarbeitung geeignet sind. Bevorzugte Zwischenprodukte sind Granulat oder Pulver.

In einer bevorzugten Ausführungsform 2 des Zwischenprodukts, gemäß der Ausführungsform 1 liegt das Zwischenprodukt in Form eines Granulates oder Pulvers vor.

Bevorzugt hat das Granulat einen Durchmesse zwischen 1 mm und 10 cm, bevorzugt zwischen 1 mm und 5 cm, weiter bevorzugt zwischen 1 mm und 1 cm, besonders bevorzugt zischen 1 mm und 8 mm. Dagegen spricht man von Pulver, wenn dieses einen Durchmesser von weniger als 1 mm hat.

In einer bevorzugten Ausführungsform 3 des Zwischenprodukts nach einem der vorhergehenden Ausführungsformen oder einer ihrer bevorzugten Ausführungsformen liegt das zahlenmittlere Molekulargewicht des Polyoxazolidinons zwischen 5x10³ g/Mol und 50 x10³ g/Mol, vorzugsweise zwischen 8x10³ g/Mol und 35 x10³ g/Mol, ferner bevorzugt zwischen 12 x10³ g/Mol und 30 x10³ g/Mol und sehr bevorzugt zwischen 15 x10³ g/Mol und 20 x10³ g/Mol.

### Antioxidationsmittel

Grundsätzlich kommen verschiedene Antioxidationsmittel in Betracht, siehe z.B. Zweifel, Hans; Maier, Ralph D.; Schiller, Michael (2009). Handbuch für Kunststoffadditive (6. Aufl.). Mu-nich: Hanser. ISBN 978-3-446-40801-2.

Beispielhaft und bevorzugte Antioxidationsmittel sind Lecithine, Polyphosphate, Acetylcystein, A-Ketoglutarsäure, Ascorbinsäure, Butylhydroxyanisol, Butylhydroxytoluol, Calciumascorbat, Calciumhydrogensulfit, Calciumsulfit, Citronensäure, Diphosphate, 3-(3,5-Di-tert-butyl-4-hydroxyphenyl)propionsäuremethylester, Ethylendiamintetraessigsäure, Gallate, 4-Hexylresorcin, Hydroxymethylfurfural, Idebenon, Isoascorbinsäure, Kaliumhydrogensulfit, Kaliumsulfit, Mercaptoessigsäure, Methylencitronensäure, Milchsäure, Natriumascorbat, Natriumdisulfit, Natriumdithionit, Natriumhydrogensulfit, , Natriumisoascorbat, Natriumsulfit, Palmitinsäureascorbylester, Pentanatriumtriphosphat, Plastochromanol-8, Schwefeldioxid, Sesamol, sterisch gehindertes Phenol, Tocopherol, Tocotrienole, Zinn(II)-chlorid

In einer bevorzugten Ausführungsform 4 des Zwischenprodukts nach einem der vorhergehenden Ausführungsformen oder einer ihrer bevorzugten Ausführungsformen ist das Antoxidationsmittel (iii) ausgewählt aus der Gruppe sterisch gehindertes Phenol, Analoga eines sterisch gehinderten Phenols, und sekundäres aromatisches Amin, oder ist eine Mischung hiervon. Ein bevorzugte aromatisches Amin ist alkyliertes Diphenylamin.

In einer bevorzugten Ausführungsform 5 des Zwischenprodukts nach einem der vorhergehenden Ausführungsformen oder einer ihrer bevorzugten Ausführungsformen ist das Antoxidationsmittel ein sterisch gehindertes Phenol.Bevorzugt enthält das sterisch gehindertes Phenol eine aktive Gruppe der allgemeinen Formel (I), 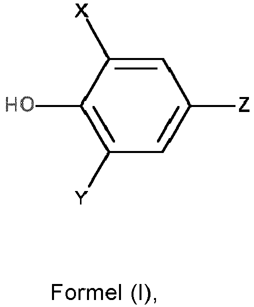 wobei,
X und Y unabhängig voneinander ein Wasserstoffatom oder geradkettige, verzweigte oder cyclische Alkylreste mit 1 bis 12 Kohlenstoffatomen sind, und
Z eine kovalente Bindung ist, über die die aktive Gruppe an das verbleibende Molekül des Antioxidationsmittels gebunden ist, und wobei die aktive Gruppe der allgemeinen Formel (I) weiterhin durch einen verbindenden Rest (II) verbunden ist, so dass das Antioxidationsmittel die folgende Struktur aufweist:

   (I)-X-R-[Y-R]ₙ-X-(II)

   oder

   [(I)-X-R-[Y-R]ₙ-Y]ₘ-A

   wobei,
   X ist: -O-, -S- oder -NH-,
   Y ist: -O- oder -S-,
   R ist ein C2- bis C12-Alkylen, wobei der Alkylenrest geradkettig oder verzweigt ist,
   n ist eine ganze Zahl ,
   m ist 2, 3, 4, 5, 6, 7 oder 8, und
   A ist eine Kohlenwasserstoffstruktur mit 3 bis 20 Kohlenstoffatomen.

In der bevorzugten Ausführungsform 6, die alle Merkmale einer der vorhergehenden Ausführungsform 5 bzw. einer ihrer bevorzugten Ausführungsformen umfasst, ist das Antioxidationsmittel ausgewählt aus der Gruppe, Dibutylhydroxytoluol, Octadecyl-3-[3,5-Di-tert-butyl-4-hydroxyphenyl]¬propionat, 3-(3,5-Di-tert-butyl-4-hydroxyphenyl)propionsäuremethylester,Pentaerythrityltetrakis(3-(3,5-bis(1,1-dimethylethyl)-4-hydroxyphenyl)propionat, (N,N'-Hexamethylenbis-(3,5-di-tert-butyl-4-hydroxy-hydrocinnamid), 3-(3,5-di-tert-butyl-4-hydroxyphenyl)propionat-terminiertes Polyethylenglycyol, und 3-(3,5-di-tert-butyl-4-hydroxyphenyl)propionat-terminiertes Polytetrahydrofuran, oder ist eine Mischung hiervon.

In der bevorzugten Ausführungsform 7, nach einer der vorhergehenden Ausführungsform 5 bis 6 bzw. einer ihrer bevorzugten Ausführungsformen ist das Antioxidationsmittel ausgewählt aus der Gruppe Dibutylhydroxytoluol, Octadecyl-3-[3,5-Di-tert-butyl-4-hydroxyphenyl]¬propionat, 3-(3,5-Di-tert-butyl-4-hydroxyphenyl)propionsäuremethylester, Penta¬erythrit-Tetrakis(3-(3,5-di-tert-butyl-4-hydroxyphenyl)propionat), oder ist eine Mischung hiervon.

In der bevorzugten Ausführungsform 8, gemäß einer der Ausführungsform 1 bis 3 bzw. einer ihrer bevorzugten Ausführungsformen umfasst ist das Antioxidationsmittel Dibutylhydroxytoluol oder 3-(3,5-Di-tert-butyl-4-hydroxyphenyl)¬propionsäuremethylester. Ebenso bevorzugt sind entsprechende Analoga.

### Katalysator

In bevorzugten Ausführungsformen wird bei der Synthese des Polyoxazolidinons ein Katalysator zugesetzt, der die Synthese günstig beeinflusst. Entsprechende Katalysatoren werden beispielsweise in den Dokumenten WO 2015/173111 A1, WO 2015 / 173 110 A1, US 2014 / 012 1299, DE 10 2014 226 838 A1, WO 2014/076024 A1, WO 2018/149844 A1 und WO 2020 / 016276 A1 beschrieben.

In einer weiter bevorzugten Ausführungsform 9 des Zwischenprodukts, das gemäß eines der vorhergehenden Ausführungsformen bzw. eines ihrer bevorzugten Ausführungsformen enthält das Zwischenprodukt einen Katalysator.

Bevorzugt umfasst dieser Katalysator mindestens eine ionische Flüssigkeit. Ionische Flüssigkeiten sind organische Salze, deren Ionen durch Ladungsdelokalisierung und sterische Effekte die Bildung eines stabilen Kristallgitters behindern. Bereits geringe thermische Energie genügt daher, um die Gitterenergie zu überwinden und die feste Kristallstruktur aufzubrechen. Es handelt sich somit um Salze, die bei Temperaturen unter 250 °C, bevorzugt unter 200°C und besonders bevorzugt unter 150 °C flüssig sind, ohne dass das Salz dabei in einem Lösungsmittel wie Wasser o.ä. gelöst ist.

Bevorzugt enthalten die Kationen der ionischen Flüssigkeit einen Grundkörper der aus folgender Gruppe ausgewählt ist: Imidazolium, Pyridinium, Pyrrolidinium, Guanidinium, Uronium, Thiouronium, Piperidinium, Morpholinium, Ammonium und Phosphonium. Weiter bevorzugt sind diese Grundkörper alkyliert. Bevorzugt sind die Anionen in der ionischen Flüssigkeit Halogenide oder komplexe Ionen, die bevorzugt ausgewählt sind aus der Gruppe: Tetrafluoroborat, Trifluoracetat, Triflat, Hexafluorophosphat, Phosphinat und Tosylat. In einer anderen bevorzugten Ausführungsform sind die Anionen organische Ionen, bevorzugt Imide oder Amide.

Die ionische Flüssigkeit umfasst vorzugsweise ein heterocyclisches Kation oder ein Ammoniumkation , bevorzugter ein Kation, ausgewählt aus der Gruppe: Pyridiniumionen, Pyrazolinium-, Pyrazolium-Ionen, Imidazolinium, Imid-Azolium und Ammonium sowie ein entsprechendes Anion, das vorzugsweise aus der Gruppe der Halogenide, bevorzugter aus der Gruppe bestehend aus Chlorid, Bromid und lodid, bevorzugter aus der Gruppe bestehend aus Chlorid, Bromid und lodid, bevorzugter aus der Gruppe bestehend aus Chlorid, Bromid und lodid, ausgewählt ist.

In einer weiter bevorzugten Ausführungsform 10 des Zwischenprodukts, gemäß eines der vorhergehenden Ausführungsformen bzw. eines ihrer bevorzugten Ausführungsformen enthält das Zwischenprodukt einen Katalysator, der eine ionische Flüssigkeit enhält, die bevorzugter ausgewählt aus der Gruppe 1-Ethyl-3-methylimidazoliumbromid (EMIM-Br), 1-Benzyl-3-methylimidazoliumchlorid (BEMIM-Cl), 1-Butyl-1-methylpiperidiniumchlorid (BMPM-Cl), 1-Butyl-1-methylpiperidiniumacetat (BMPM-Acetat), 1-Ethyl-2,3-dimethyl¬imidazoliumbromid (EDMIM-Br) und 1-(2-Hydroxyethyl)-3-methylimidazoliumchlorid (HEMIM-Cl), oder eine Mischung hiervon ist.

Die Katalysatorkonzentration beträgt bevorzugt 0,05 Mol-% bis 5 Mol-% bezogen auf die Epoxidgruppen des Diepoxids, bevorzugt 0,05 Mol-% bis 2 Mol-%, und besonders bevorzugt 0,05 Mol-% bis 0,5 Mol-%.

### Co-Katalvsatoren

In anderen bevorzugten Ausführungsformen werden neben der oben genannten Katalysatoren Co-Katalysatoren eingesetzt, bevorzugt Harnstoff-Derivate.

Die Verwendung von Harnstoffen als Co-Katalysatoren hilft bei der Umsetzung des Isocyanates mit dem Epoxid. Eine schnellere Umsetzung des Isocyanates ist vorteilhaft, da langere Verweilzeiten des Isocyanates im Reaktionsgemisch die Wahrscheinlichkeit der Trimersierung des Iso- cyanates erhöhen und somit die Chemoselektivitat zur Oxazolidinonbildung verschlechtern. Be- vorzugte sind Harnstoffe, welche bei Zersetzung, z.B. bei Zuführung von Wärme, keine primären Amine abspalten.

In einer weiter bevorzugten Ausführungsform 11 des Zwischenprodukts, gemäß eines der vorhergehenden Ausführungsformen 9 bis 10 bzw. eines ihrer bevorzugten Ausführungsformen enthält das Zwischenprodukt weiterhin einen Co-Katalysator, bevorzugt ein Harnstoffderivat, bevorzugt ein solches gemäß der folgenden Formel (II) 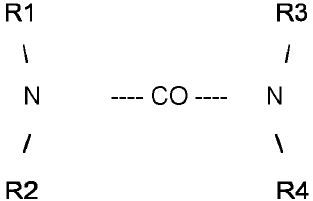 wobei
R1, R2, R3 und R4 Alkylreste sind mit unabh ängig voneinander 1 bis 10 Kohlenstoffatomen oder
R1 und R2 Alkylreste sind mit unabhängig voneinander 1 bis 10 Kohlenstoffatomen und R3 ein Aryl-Rest und gleichzeitig R4 ein Wasserstoffatom oder R3 ein Aryl-Rest und R4 ein Wasserstoffatom ist. Der Arylrest ist in einer bevorzugten Ausführungsform substituiert, bevorzugt mit einem weiteren Harnstoffrest. In anderen bevorzugten Ausführungsformen ist der Arylrest mit mehreren Harnstoffresten substituiert. Die entsprechenden Strukturen werden auch als Polyharnstoff angesprochen.

In anderen bevorzugten Ausführungsformen sind die Alkyl-Substituenten miteinander verbunden und weisen Ringstrukturen auf. Bevorzugte Beispiel hierfür sind 1,3-Dimethyl-3,4,5,6-tetrahydro-2(1H)-pyrimidinon und 1,3-Dimethyl-2-imidazolidinon.

Besonders bevorzugt sind Co-Katalysatoren ausgewählt aus der Gruppe 3,3'-(4-Methyl-1,3- phenylene) bis (1,1-dimethylurea) und 1,1-dimethyl-3-phenylurea. Kommerziell erhältliche Produkte dieser Klasse sind z.B. die Dimethylharnstoffe der Firma AlzChem, Handelsname Dyhard^{®}.

Gemäß einer bevorzugten Ausführungsform stellen die Mengen an Polyisocyanatzusammensetzung (i), Epoxidzusammensetzung (ii), Katalysatorzusammensetzung (iii) und Co-Katalysator 95 Gewichts-%, bevorzugt 98 Gewichts-%, der gesamten Reaktionsmenge aller vorhandenen Stoffe dar.

In einer bevorzugten Ausfuhrungsform wird der Co-Katalysator als Losungsmittel für die Reaktanten eingesetzt, wobei in einer bevorzugten Ausfuhrungsform der Co-Katalysator 1,3- Dimethyl-2-imidazolidon ist.

Cokatalysatoren bzw. Losungsmittel werden bevorzugt vor ihrer Verwendung getrocknet. In einer bevorzugten Ausführungsform erfolgt die Trocknung durch ein Molekularsieb.

In einer Ausführungsform wird zusätzlich oder anstelle des Co-Katalysators mindestens ein Lösungsmittel eingesetzt. Geeignete Lösungsmittel sind aprotischpolar. Dies hat den Vorteil, dass sie nicht mit dem Isocyanat reagieren. Bevorzugte Lösungsmittel sind Dichlorbenzol, bevorzugt 1,2, Dichlorbenzol, 1,2,3-Trichlorbenzol, 1,2,4-Trichlorbenzol und 1,3,5-Trichlorbenzol, Sulfolan, Mesitylen, oder N-Methylpyrolidon. Ein besonders geeignetes Lösungsmittel ist Sulfolan (Tetrahydrothiophen-1,1-dioxid).

Die Konzentration des optionalen eingesetzten Co-Katalysators beträgt bevorzugt 0,01 Mol-% bis 1 x 10³ Mol-% bezogen auf Epoxidgruppen des Diepoxids, bevorzugt 0,05 Mol-% bis 1 x 10² Mol-%, besonders bevorzugt 0,05 Mol-% bis 10 Mol-% und ins besondere 0,05 Mol-% bis 1 Mol-%.

### Reaktionsbedingungen

In einer bevorzugten Ausführungsform 12 des Zwischenprod uktes, gemäß einer der vorherge herden Ausführungsformen oder einer ihrer bevorzugten Ausführungsformen ist der Wassergehalt der Reaktionsmischung kleiner als 0,1 Gew.-%. So wird insbesondere die Nebenreaktion des Isocyanats zu Harnstoff verhindert. Die Reaktionsmischung ist die Mischung, die die Edukte Diepoxid und Diisocyanat enthält, ggf. weiterhin Katalysator, Co-Katalysator, sowie sonstige bereits bei der Reaktion eingesetzten Zusatz- und Hilfsstoffe.

In einer bevorzugten Ausführungsform 13 des Zwische nproduktes, gemäß einer der vorhergeherden Ausführungsformen oder einer ihrer bevorzugten Ausführungsformen liegt das Molverhältnis des Diepoxids zum Diisocyanat liegt bevorzugt in einem Bereich zwischen 1,0 : 0,5 bis 0,5 : 1,0, bevorzugt zwischen 1,0 : 0,9 bis 0,9 :1,0 und besonders bevorzugt bei 1,0 : 1,0.

Bevorzugt erfolgt die Herstellung des Polyoxazolidinon unter Ausschluss von Sauerstoff. Eine bevorzugte Form dies zu gewährleisten ist die Synthese in Gegenwart von Inertgas. Unter Inertgas werden bei den Reaktionsbdingungn gasformigen Materialien verstanden, d.h. solche Gase, die nicht mit eingesetzten Komponenten reagieren.

Dabei bezeichnet der Begriff "Inertgas" sowohl ein einzelnes Gas als auch ein Gemisch aus zwei oder mehr Gasen. Bevorzugte Beispiele für Inertgas sind Helium, Neon, Argon, Krypton, Radon, Xenon, Stickstoff.

### Isocyanat

Vorliegend wird als Diisocyanat sowohl eine einzige Substanz als auch eine Mischung von Substanzen verstanden, die bevorzugt aus der nachfolgenden Aufzählung ausgewählt ist.

In einer bevorzugten Ausführungsform 14 des Zwischenproduktes, gemäß einer der vorhergeherden Ausführungsformen oder einer ihrer bevorzugten Ausführungsformen, ist das Diisocyanat bevorzugt ein organisches Isocyanat, weiter bevorzugt ist aliphatisches, cycloaliphatisches, araliphatisches und/oder aromatisches Isocyanate, die weiter bevorzugt ausgewählt sind aus der Gruppe Tri-, Tetra-, Penta-, Hexa-, Hepta- und/oder Oktamethylendiisocyanat, 2-Methyl-pentamethylen-diisocyanat-1,5,2-Ethyl-butylen-diisocyanat-1,4, Pentamethylen-diisocyanat-1,5, Butylen-diisocyanat-1,4, 1-Isocyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), 1,4-Cyclohexan-diisocyanat, 1-Methyl-2,4- und/oder -2,6-cyclohexan-diisocyanat, 4,4'-, 2,4'- und/oder 2,2'-Dicyclohexylmethan-diisocyanat, 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), Diphenylmethandiisocyanat, 3,3'-Dimethyl-diphenyl-diisocyanat, 1,2-Diphenylethandiisocyanat, 4,4'-, 2,4'- und 2,2'-Dicyclohexylmethan-diisocyanat (H12 MDI), 2,4-Paraphenylendiisocynat (PPDI), 2,4-Tetramethylenxylendiisocyant (TMXDI) bevorzugt 2,2'-, 2,4'- und/oder 4,4'-Diphenylmethandiisocyanat (MDI) und/oder 1,6-Hexamethylendiisocyanat (HDI).

In einer bevorzugten Ausführungsform 15 des Zwi schenproduktes, gemäß einer der vorhergeherden Ausführungsformen oder einer ihrer bevorzugten Ausführungsformen ist das Isocyanat ein aromatisches Diisocyanat, das bevorzugt aus der obigen Liste ausgewählt ist.. Weiter bevorzugt ist das Isocyant ausgewählt aus der Gruppe Toluylendiisocyanat (TDI), Diphenylmethandiisocyanat (MDI) und 1,5-Naphthylendiisocyanat (NDI), oder ist ein Gemisch hiervon. Ganz besonders bevorzugt sind Toluylendiisocyanat (TDI), oder Diphenylmethandiisocyanat (MDI).

### Diepoxid

In einer bevorzugten Ausführungsform 16 des Zwischenproduktes, gemäß einer der vorhergeherden Ausführungsformen oder einer ihrer bevorzugten Ausführungsformen ist das Diepoxiden ein Epoxid mit bevorzugt genau zwei Epoxidgruppen pro Molekül. Dieses Epoxid kann gesättigt oder ungesättigt, aliphatisch, cycloaliphatisch, aromatisch oder heterocyclisch oder eine Mischung hiervon sein. Bevorzugt enhält das Diepoxid nur solche Substituenten, die unter den Reaktionsbedingungen keine störenden Nebenreaktionen verursachen, bevorzugt Alkyl- oder Arylsubstituenten, bzw. Ethergruppierungenoder Mischungen hiervon..

Vorzugsweise handelt es sich bei dem Diepoxiden um ein Diepoxid mit endständigen Epoxidgruppen. Das Diepoxid ist bevorzugt ein Polyglycidylether auf der Basis von zweiwertigen Alkoholen, Phenolen, Hydrierungsprodukten dieser Phenole und/oder von Novolacken. Novolacke sind Umsetzungsprodukte von Phenolen mit Aldehyden, insbesondere Formaldehyd, in Gegenwart saurer Katalysatoren, besonders bevorzugt sind dabei die Diglycidylether. Andere bevorzugte Diepoxide sind solche auf Basis von anderen Strukturen, welche keine Ethergruppen enthalten.

Wiederum andere bevorzugte Diepoxide basieren auf Diglycidylethern von natürlichen Rohstoffen, bevorzugt Cardanol. Ein typisches Beispiel für ein solches Produkt ist Cardolite NC 514 (Fa. Cardolite). Der Vorteil dieses Epoxids ist die längere Alkylkette zwischen den Aromaten die zu einer höheren Flexibilität der daraus hergestellten Polymere führt. Besonders wirken sich die Vorzüge von aliphatischen Strukturelementen in Kombination mit aromatischen Diglycidylethern aus. Daher sind Diepoxide basierend auf aliphatischen Diglycidylethern in Kombination mit aromatischen Diglycidylethern besonders bevorzugt.

In einer bevorzugten Ausführungsform 17 des Zwischenproduktes, gemäß einer der vorhergeherden Ausführungsformen oder einer ihrer bevorzugten Ausführungsformen liegt das Epoxidäquivalentgewicht (EEW) dieser Epoxidverbindungen liegen vorzugsweise zwischen 100 und 5000, insbesondere zwischen 150 und 500. Das Epoxidäquivalentgewicht einer Substanz ist dabei als diejenige Menge der Substanz (in Gramm) definiert, welche 1 Mol Oxiranringe enthält.

Zur Charakterisierung des Gehalts von Verbindungen an Oxirangruppen, auch als Epoxidgruppen bezeichnet, wird bevorzugt eine Epoxidtitration mit einer 0,1-N Losung von Perchlorsäure in Eisessig durchgeführt (DIN EN ISO 3001). Die dabei erhaltene Epoxidzahl (%EpO) gibt an, wieviel Gramm Oxiran-Sauerstoff in 100 Gramm einer Probe enthalten sind. Als Indikator setzt man bevorzugt Kristallviolett ein. Die Bestimmung setzt die Abwesenheit von Wasser, Basen und Aminen voraus. Aus dem Verbrauch an ml 0,1N Perchlorsaure bei der Titration (x), dem Verbrauch an ml 0,1N Perchlorsaure bei der Blindprobe (y) und der Einwage der zu untersuchenden Probe in Gramm (E) wird der Epoxidgehalt %EpO wird wie folgt berechnet: % EpO=[(x-y)+0, 160]/E. Das Epoxid-Äquivalentgewicht (EEW) errechnet sich daraus wiederum nach derfolgenden Formel: EEW = 1600 / % EpO, wobei die Dimension des EEW [g/äq] ist.

Als mehrwertige Phenole kommen vorzugsweise folgende Verbindungen in Frage: Resorcin, Hydrochinon, 2,2-Bis-(4-hydroxyphenyl)propan (Bisphenol A), Isomerengemische des Dihydroxydiphenylmethans (Bisphenol F), Tetrabrombisphenol A, 4,4'-dihydroxy-diphenylcyclohexan, 4,4'-dihydroxy-3,3-dimethyldiphenylpropan, 4,4'-Dihydroxydiphenyl, 4,4'-Dihydroxy-benzophenol, Bis-(4-hydroxyphenyl)-1,1-ethan, Bis-(4-hydroxyphenyl)-1,1-isobutan, Bis-(4-hydroxyphenyl)-methan, Bis-(4-hydroxyphenyl)-ether, Bis-(4-hydroxy-phenyl)-sulfon u.a. sowie die Chlorierungs- und Bromierungsprodukte der vorstehend genannten Verbindungen; Bisphenol A ist dabei ganz besonderes bevorzugt. Handelsübliche Produkte für Bisphenol A-Diglycidylethersind z.B DER 331, DER 330 der Fa. DOW U.S.A. oder Epilox A18-00 der Firma Leuna Harze, Deutschland.

In einer bevorzugten Ausführungsform 18 des Zwischenprodukts, gemäß einer der vorhergehenden Ausführungsformen oder einer ihrer bevorzugten Ausführungsformen ist das Diepoxid ein Polyglycidylether, vorzugsweise ein Diglycidylether.

### Hilf- und Zusatzstoffe

Neben Katalysator und Co-Katalysator werden den Aufbaukomponenten in bevorzugten Ausführungsformen gemäß einer der vorhergehenden Ausführungsformen des Zwischenproduktes oder einer seiner bevorzugten Ausführungsformen auch Hilfsstoffe bzw. Zusatzstoffe hinzugefügt. Genannt seien beispielsweise und bevorzugt oberflächenaktive Substanzen, Füllstoffe, Flammschutzmittel, Keimbildungsmittel, Oxidationsstabilisatoren, Gleitund Entformungshilfen, Farbstoffe und Pigmente, gegebenenfalls Stabilisatoren, bevorzugt gegen Hydrolyse, Licht, Hitze oder Verfärbung, anorganische und/oder organische Füllstoffe, Verstärkungsmittel und/oder Weichmacher.

Stabilisatoren im Sinne der vorliegenden Erfindung sind Additive, die einen Kunststoff oder eine Kunststoffmischung gegen schädliche Umwelteinflüsse schützen. Beispiele sind primäre und sekundäre Antioxidantien, sterisch gehinderte Phenole, Hindered Amine Light Stabilizer, UV-Absorber, Hydrolyseschutzmittel, Quencher und Flammschutzmittel. Beispiele für kommerzielle Stabilisatoren sind gegeben in Plastics Additives Handbook, 5th Edition, H. Zweifel, ed., Hanser Publishers, München, 2001 ([1]), S.98-S136.

In einer bevorzugten Ausführungsform weisen die UV-Absorber ein zahlenmittleres Molekulargewicht von größer als 0,3x10³ g/mol, insbesondere größer als 0,39 x 10³ g/mol, auf. Ferner sollten die bevorzugt verwendeten UV-Absorber eine Molekulargewicht von nicht größer als 5 x 10³ g/mol, besonders bevorzugt von nicht größer als 2 x 10³ g/mol aufweisen.

Besonders geeignet als UV-Absorber ist die Gruppe umfassend Cinnamate, Oxanilide und Benzotriazole, besonders bevorzugt sind Benzotriazole. Beispiele für besonders geeignete UV absorber sind Tinuvin^{®} 213, Tinuvin^{®} 234, Tinuvin^{®} 312, Tinuvin^{®} 571, sowie Tinuvin^{®} 384 und das Eversorb^{®} 82.

Üblicherweise werden die UV-Absorber in Mengen von 0.01 Gew.-%, bis 5 Gew.-% bezogen auf die Gesamtmasse TPU zudosiert, bevorzugt 0,1 Gew.-% bis 2,0 Gew.-%, insbesondere 0,2 Gew.-% bis 0,5 Gew.-%.

Oft ist eine oben beschriebene UV-Stabilisierung basierend auf einem Antioxidant und einem UV-Absorber noch nicht ausreichend, um eine gute Stabilität des erfindungsgemäßen TPU gegen den schädlichen Einfluss von UV-Strahlen zu gewährleisten. In diesem Falle kann zusätzlich zu dem Antioxidans und dem UV-Absorber noch ein Hindered-Amine Light Stabiizer (HALS) zu dem erfindungsgemäßen TPU zugegeben werden. Die Aktivität der HALS-Verbindungen beruht auf ihrer Fähigkeit, Nitroxylradikale zu bilden, die in den Mechanismus der Oxidation von Polymeren eingreift. HALS gelten als hocheffiziente UV-Stabilisatoren für die meisten Polymere.

HALS-Verbindungen sind allgemein bekannt und kommerziell erhältlich. Beispiele für kommerziell erhältliche HALS-Stabilisatoren finden sich in Plastics Additive Handbook, 5th edition, H. Zweifel, Hanser Publishers, München, 2001, S. 123-136.

Als Hindered Amine Light Stabilizer werden bevorzugt Hindered Amine Light Stabilizer genommen, bei denen das zahlenmittlere Molekulargewicht größer als 500 g/mol sind. Ferner sollte das Molekulargewicht der bevorzugten HALS-Verbindungen nicht größer als 10 x 103 g/mol, besonders bevorzugt nicht größer als 5x10³ g/mol sein.

Besonders bevorzugte Hindered Amine Light Stabilizer sind bis-(1,2,2,6,6-pentamethyl-piperidyl) sebacat (Tinuvin^{®} 765, Ciba Spezialitätenchemie AG) und das Kondensationsprodukt aus 1-Hydroxyethyl-2,2,6,6-tetramethyl-4-hydroxypiperidin und Bernsteinsäure (Tinuvin^{®} 622). Insbesondere bevorzugt ist das Kondensationsprodukt aus 1-Hydroxyethyl-2,2,6,6-tetramethyl-4-hydroxypiperidine and Bernsteinsäure (Tinuvin^{®} 622), wenn der Titangehalt des fertigen Produktes kleiner als 150 ppm, bevorzugt kleiner als 50 ppm, insbesondere kleiner als 10 ppm bezogen auf die eingesetzten Aufbaukomponenten ist.

HALS Verbinungen werden bevorzugt in einer Konzentration von 0,01 Gew.-% bis 5 Gew.-% eingesetzt, besonders bevorzugt von 0,1 Gew.-% bis 1 Gew.-%, insbesondere von 0,15 Gew.-% bis 0,3 Gew.-% bezogen auf das Gesamtgewicht des thermoplastischen Polurethanes bezogen auf die eingesetzten Aufbaukomponenten.

Eine besonders bevorzugte UV Stabilisierung enthält eine Mischung aus einem phenolischen Stabilisator, einem Benzotriazol und einer HALS-Verbindung in den oben beschriebenen bevorzugten Mengen.

Nähere Angaben über die oben genannten Hilfsmittel- und Zusatzstoffe sind der Fachliteratur zu entnehmen, z.B. aus Plastics Additives Handbook, 5th edition, H. Zweifel, ed., Hanser Publishers, München, 2001.

### Herstellung

Ein weiterer Aspekt dieser Erfindung und Ausführungsform 19 ist ein Verfahren zur Herstellung eines Zwischenproduktes aus einer Zubereitung, bevorzugt nach einer der vorhergehenden Ausführungsformen oder einer ihrer bevorzugten Ausführungsformen die ein thermoplastisches Polymer enthält, das durch Umsetzen der Komponenten (i) bis (ii) hergestellt wird:
(i) eine Polyisocyanat-Zusammensetzung, die mindestens ein Diisocyanat enthält;
ii) eine Epoxidzusammensetzung, die mindestens ein Diepoxid umfasst;
in Gegenwart eines Antioxidationsmittels (iii), ggf. weiterhin in Gegenwart eines Katalysators, eines Co-Katalysators, von Hilfsstoffen, von Zusatzstoffen oder Mischungen hiervon..

### Bevorzugtes Verfahren

Weiterhin betrifft die Erfindung in einer Ausführungsform 20, die bevorzugt alle Merkmale eine der vorhergehenden Ausführungsformen oder einer ihrer Bevorzugungen enthält, ein Verfahren zur Herstellung eines Zwischenproduktes enthaltend ein thermoplastisches Polymer, erhalten oder erhältlich durch Umsetzung mindestens der Komponenten (i) bis (ii)
(i) Diisocyanat;
(ii) Diepoxid;
(iii) in Gegenwart eines Antioxidationsmittels und
(iv) in Gegenwart eines Katalysators (iii); gegebenenfalls eines Co-Katalysators, wobei
(v) bei einer Temperatur in einem ersten Temperaturbereich (T1) Epoxid (ii) und Katalysator (iii) in Mischung vorgelegt werden;
(vi) unter Beibehaltung einer ersten Temperatur zumindest anteilig das Polyisocyanat (i) zugegeben wird;
(vii) die Temperatur auf eine Temperatur in einem finalen Temperaturbereich (Tf) erhöht wird;
(viii) im finalen Temperaturbereich (Tf) die Zugabe der verbliebenen Polyisocyanatzusammensetzung (i) erfolgt.

### Temperaturbereiche

In einer bevorzugten Ausführungsform wird die Temperatur auf eine Temperatur in einem finalen Temperaturbereich (Tf) erhöht. Bevorzugt umfasst der finale Temperaturbereich Tf einen zweiten Temperaturbereich Bereich T2 und einen dritten Temperaturbereich T3, wobei der dritte Temperaturbereich T3 oberhalb des zweiten Temperaturbereichs T2 liegt und der zweite Temperaturbereich T2 oberhalb des ersten Temperaturbereichs T1 liegt. Bevorzugt liegt der finale Temperaturbereich Tf zwischen 190 °C und 250°C, bevorzugt zwischen 170 °C und 250 °C, weiter bevorzugt zwischen 165 °C und 250 °C, wobei bevorzugt der zweite Temperaturbereich T2 zwischen 180 °C und 200 °C, bevorzugt zwischen 170 °C und 200 °C, weiter bevorzugt zwischen 165 °C und 200 °C liegt, und gleichzeitig der dritte Temperaturbereich T3 zwischen 200 °C und 250 °C, bevorzugt zwischen 200 °C und 230 °C liegt.

Bevorzugt werden bei einer Temperatur in einem ersten Temperaturbereich (T1) das Diepoxid (ii) und der Katalysator (iii) in Mischung vorgelegt, in bevorzugten Ausführungsformen mit dem Co-Katalysator. Bevorzugt beträgt der erste Temperaturbereich T1 140 °C bis 180 °C, bevorzugt 150°C bis 170 °C, weiter bevorzugt 155°C bis 165 °C.

Bevorzugt wird unter Beibehaltung einer Temperatur im ersten Temperaturbereich T1 zumindest anteilig das Diisocyanat zugegeben. Bevorzugt werden im ersten Temperaturbereich T1 80 Gewichts-% bis 95 Gewichts-% des Diisocyanats, bezogen auf die Gesamtmenge des Diisocynats zugegeben.

"Unter Beibehaltung einer Temperatur im ersten Bereich T1" bedeutet, dass die Temperatur um bis zu +/- 10 °C, bevorzugt um bis zu +/- 5 °C, weiter bevorzugt um bis zu +/- 3°C, von der eingestellten Temperatur abweichen kann, wobei trotzdem eine Einhaltung des Temperaturbereichs T1 vorliegt, d.h. die Temperatur bleibt im Schritt (b) bevorzugt im Temperaturbereich T1 von140°C bis 180 °C, bevorzugt im Bereich von 150°C bis 170 °C, weiter bevorzugt im Bereich von 155 °C bis 165 °C.

Entsprechend bevorzugt erfolgt im finalen Temperaturbereich (Tf) die Zugabe des verbliebenen Diisocynats. Bevorzugt werden im finalen Temperaturbereich (Tf) 5 Gewichts-% bis 20 Gewichts-% des Diisocyanats, bezogen auf die Gesamtmenge des Diisocynats zugegeben, wobei bevorzugt im zweiten Temperaturbereich (T2) 5 Gewichts-% bis 20 Gewichts-% des Diisocynats, und im dritten Temperaturbereich T3 optional 0 Gewichts-% bis 10 Gewichts-%, bevorzugt 0 Gewichts-%, des Diisocyanats, jeweils bezogen auf die Gesamtmenge des Diisocyanats zugegeben werden.

### Verwendung

Ein weiterer Aspekt dieser Erfindung und eine Ausführungsform 21 ist die Verwendung eines Zwischenprodukts nach einem der Ausführungsformen 1 bis 18 oder des thermoplastischen Polymers, hergestellt nach einem der Ansprüche 19 bis 20, zur Herstellung einer Faser, eines Schaums, einer Folie und/oder eines Formkörpers durch Spritzgießen, Kalandrieren, Pulversintern, Lasersintern, Schmelzpressen oder Extrusion; oder als Modifizierungsmittel für Polymere.

Bevorzugte Verwendungen für die das Zwischenprodukt eingesetzt wird, sind ausgewählt aus, Antriebsriemen für Maschinen, Beschichtung, Dämpfungselement, Faltenbalg, Folie, Faser, Formkörper, Fußboden für Gebäude und Transport, non woven Gewebe, bevorzugt Dichtung, Rolle, Schuhsohle, Schlauch, Kabel, Kabelstecker, Kabelummantelung, Kissen, Laminat, Profil, Riemen, Sattel, Schaum, durch zusätzliches Schäumen der Zubereitung, Steckverbindung, Schleppkabel, Solarmodul, Transportbänder insbesondere für Aufzüge und Rolltreppen, dort insbesondere Handläufe, Verkleidung in Automobilen, Wischerblatt, Modifizierer für thermoplastische Materialien, d.h. Substanz die die Eigenschaften eines anderen Materials beeinflusst. Jede dieser Verwendungen für sich genommen ist eine bevorzugte Ausführungsform, die auch als Anwendung bezeichnet wird. Die Anwendungen werden bevorzugt durch Aufschäumen, Spritzguss, Kalandrieren, Pulversintern, oder Extrusion hergestellt.

Ein weiterer Aspekt dieser Erfindung ist ein Formkörper oder Polymer, das mit dem erfindungsgemäßen Zwischenprodukt hergestellt wurde.

Die Erfindung wird mit dem folgenden Beispiel veranschaulicht, das in keiner Weise einschränkend für die Erfindung ist.

### Beispiele (BBB)

### 1. Beispiel - Chemikalien und Geräte

**Tabelle 1:**

| Bezeichnung | Chemische Bezeichnung |
|---|---|
| D.E.R. 332 | Bis-Phenol-A-diglycidylether (D.E.R. 332 , von Sigma Aldrich, CAS 1675-54-3) |
| 4,4'-MDI | 4,4'-Diphenylmethandiisocyanat |
| BMPM-CI | 1-Butyl-1-methylpiperidinium-chlorid |
| Extruder *) | 15 ml Twin Screw Microcompounder MC 15 High torque and High force der Firma Xplore |
| Irganox 1076 | Octadecyl-3-[3,5-di-tert-butyl-4-hydroxyphenyl]propionat] |
| Schmelzviskosimeter | Rheometer "DHR-2" von TA Instruments, Newcastle (DE), USA USA mit einer beidseitig elektrisch beheizten Parallele-Platte-Geometrie von 25 mm Durchmesser |

### Beispiel 2 - Versuch ohne Antioxidationsmittel

**Tabelle 2 - Einwaagen:**

| Edukt | Funktion | m [g] | M [g/mol] | n [mol] |
|---|---|---|---|---|
| DER 332 | Diepoxid | 12,2 | 349,4 | 0,034917 |
| 4,4MDI | Diisocyanat | 8,6 | 250,26 | 0,034218 |
| BMPM-CI | Katalysator | 0,0167 | 191,74 | 8,72925E-05 |

### Versuchsdurchführung:

Die Mengen gemäß Tabelle 2 an Diepoxid und Katalysatorwurden in einem Handschuhkasten zusammen unter Stickstoffschutzatmosphäre eingewogen, auf einem Magnetrührer gemischt und als Mischung in den auf 100°C vorgeheizten Extruder gegeben. Der Extruder wurde geschlossen, nur als Mischer verwendet und hierzu auf 100 Umdrehungen/min eingestellt. Anschließend wurde die Temperatur auf 160°C angehoben und die Zudosierung der in der Tabelle angegebenen Menge Isocyanat gestartet. Die Isocyanatdosierung erfolgte über eine Spritzenpumpe während eines Zeitraums von 60 min. In dieser Zeit wurde die Extrudertemperatur stufenweise von 160°C, nach 40 min auf 190° und nach weiteren 20 min auf 210°C erhöht. Nach Beenden der Isocyanatdosierung wurde die Extrudertemperatur auf 220°C erhöht und für weitere 10 min gerührt. Danach wird die Mischung, die nun zum Polyoxazolidinon reagiert ist und bei dieser Temperatur als Schmelze vorliegt, zur weiteren Testung aus dem Extruder entnommen.

### Beispiel 3 - Versuch mit Antioxidationsmittel (Antioxidanz):

**Tabelle 3 - Einwaagen:**

| Edukt | Funktion | m/g | M g/mol | n / mol |
|---|---|---|---|---|
| DER 332 | Diepoxid | 12,2 | 349,4 | 0,034917 |
| 4,4MDI | Diisocyanat | 8,6 | 250,26 | 0,034218 |
| BMPM-CI | Katalysator | 0,0167 | 191,74 | 8,72925E-05 |
| Irganox 1076 | Antioxidanz | 0,0627 | 0,0874 | 0,0627 |

### Anmerkung:

Die eingesetzte Menge Irganox 1076 entspricht 3000 ppm bezogen auf die Mengen Diepoxid (DER 332), Diisocyanat (4,4'-MDI) und Katalysator (BMPM-Cl).

### Versuchsdurchführung:

Wie unter Beispiel 2 beschrieben, nur dass zusätzlich Antioxidanz mit eingewogen wurde.

### Beispiel 4 - Polymerparameter

**Tabelle 4**

| Probe | Mn (g/mol) | Mw (g/mol) | PDI (Mw/Mn) | Selektivität (ox/trimer Verhältnis) |
|---|---|---|---|---|
| Beispiel 2 | 14102 | 54084 | 3,8 | 68% |
| Beispiel 3 | 15458 | 64877 | 4,2 | 76% |

Das zahlenmittlere Molekulargewicht (Mn) und das gewichtsmittlere Molekulargewicht der Probe wurde über Gelpermeationschromatographie (GPC *)) bestimmt (DIN 55672-1: 2016-03) und der Polydispersitätsindex (PDI) daraus rechnerisch ermittelt. *) GPC Details:

2g Polyoxazolidon wurden in 8mL N,N-Dimethylacetamid (99,8%ig von Sigma Aldrich CAS: 127-19-5) über Nacht bei Raumtemperatur gelöst. Am nächsten Tag wurden über einen 45µm Filter von Sartorius 100µL in das GPC injiziert. Mit N,N-Dimethylacetamid als Eluent wurde mit der HPLC-Pumpe 0202 der Firma Duratec mit 0,7mL/min über vier 60cm Phenogel^{™} 5 µm -Säulen (10³-104-104-10³Å) der Firma phenomenex in einem Differential-Brechungsindexdetektor RI2000 der Firma Duratec detektiert. Die Messung beträgt 130 Minuten. Als Vergleichssubstanz diente Polymethylmethacrylat.

Die Bestimmung der Selektivität erfolgte mittels Infrarotspektroskopie (IR).

Mit dem IR-Gerät AVATAR 370 FT-IR von der Firma Thermo Nicolet wurde mittels Transmissionsmessung auf dem ATR-Diamantkristall des Smart Orbit Aufsatzes von der Firma Thermo im mittleren IR-Bereich (Wellenzahl: 4000-400 cm⁻¹) das Schwingungsspektrum der Proben aufgezeichnet. Die Selektivität wurde als das Verhältnis der Schwingungsintensitäten des Oxazolidinon Peaks (1750 cm⁻¹) gegen des Isocyanurat Peaks (1710cm⁻¹) bestimmt.

### Beispiel 5 - Bestimmung der Schmelzviskosität

Die Schmelzviskositäten wurden an einem Rheometer gemessen. Hierzu wurden 2-3 g des in Beispiel 2 bzw. 3 hergestellten Polymers auf den Probenhalter gegeben und auf 200°C und 240°C erhitzt. Gemessen wurde im Anschluss die komplexe Viskosität der geschmolzenen Probe als Funktion der angelegten Frequenz. Es wurden jeweils 5 aufeinanderfolgende Messungen bei gleicher Temperatur durchgeführt (Sweep 1 bis Sweep 5). Die Messungen erfolgten nach DIN 53019 Teil 4 auf einem Rheometer "DHR-2" von TA Instruments, Newcastle (DE), USA mit einer beidseitig elektrisch beheizten Parallele-Plattemit 25 mm Durchmesser.

Die Abbildungen im Anhang zeigen die Schmelzviskosität bei jeweils 200 °C und 240 °C Gemessen wurde die Viskosität über den Frequenzbereich von 0,5 rad/sek bis 315 rad / sek. Für jede Probe wird dieser Frequenzbereich 5 mal durchlaufen (Sweep 1 bis Sweep 5). Je kleiner der Unterschied im Viskositätsverlauf beim Vergleichen von Sweep 1 (gestrichelte Linien) zu Sweep 5 (durchgezogene Linien), desto gleichbleibender ist die Viskosität des Polymers unter thermischer Belastung, was gleichzusetzen ist mit einer verbesserten Stabilität des Polymers.^

### yyy

Figur 1 zeigt auf ihrer y-Achse die Schmelzviskosität (complex viscosity [Pa/s]) und auf ihrer x-Achse den durchlaufenen Kreisfrequenz des Polymers aus Beispiel 2. Die Kurven A bis D geben den Verlauf der Viskosität als Funktion der Kreisfrequenz des Viskosimeters (angular frequency [rad/s] bei 200 °C und 240 °C an. Dargestellt sind jeweils nur der 1.

Sweep und der 5. Sweep
A = 200°C, 1. Sweep
B = 200°C, 5. Sweep
C = 240°C, 1. Sweep
D = 240°C, 5. Sweep

Die Kurven des 1. Und 5. Sweeps zeigen unterschiedliche Viskositäten sowohl für 200 °C als auch für 240°C.

Figur 2 zeigt auf ihrer y-Achse die Schmelzviskosität (complex viscosity) des Polymers aus Beispiel 3. Die Kurven A bis D geben den Verlauf der Viskosität als Funktion der Kreisfrequenzdes Viskosimeters (angular frequency [rad/s] bei 200°C und 240°C an. Dargestellt sind jeweils nur der 1. Sweep und der 5. Sweep
A = 200°C, 1. Sweep
B = 200°C, 5. Sweep
C = 240°C, 1. Sweep
D = 240°C, 5. Sweep

Hier unterscheiden sich die Schmelzviskositäten im Laufe der Messwiederholungen (1. Sweep vs 5. Sweep) im Gegensatz zu Abbildung 1 praktisch nicht. Diese Viskositätskonstanz bei anhaltender Temperaturbelastung entspricht einer Molgewichtskonstanz. Das zeigt, dass der Zusatz von Antioxidationsmittel zu stabileren Polymeren, insbesondere nach thermischer Belastung führt.

Es konnte somit gezeigt werden, dass der Zusatz des Antioxidationsmittels während der Synthese den Vernetzungsgrad und den Viskositätsanstieg bei thermischer Belastung verringert, was die Weiterverarbeitung des Polymers erleichtert.

## Patentansprüche

1. Zwischenprodukt für die Herstellung von Formteilen, bestehend aus einer Zubereitung, die ein thermoplastisches Polymer enthält, das das Reaktionsprodukt mindestens der folgenden Strukturkomponenten (i) und (ii) ist:
i) einer Polyisocyanat-Zusammensetzung, die mindestens ein Diisocyanat enthält;
ii) einer Epoxidzusammensetzung, die mindestens ein Diepoxid umfasst;
wobei die Reaktion in Gegenwart eines Antioxidationsmittels (iii) stattfindet.

2. Das Zwischenprodukt nach Anspruch 1, wobei das Zwischenprodukt in Form von Granulat oder Pulver vorliegt.

3. Das Zwischenprodukt nach einem der vorstehenden Ansprüche, **dadurch gekennzeichnet, dass** das Zahlenmittel des Molekulargewichts des thermoplastischen Polymers zwischen 5 x10 3 g/Mol und 50 x103 g/Mol, vorzugsweise zwischen 8 x10 3 g/Mol und 35 x103 g/Mol, ferner bevorzugt zwischen 12 x10 3 g/Mol und 30 x103 g/Mol und sehr bevorzugt zwischen 15 x10 3 g/Mol und 20 x103 g/Mol liegt.

4. Zwischenprodukt nach einem der vorstehenden Ansprüche, **dadurch gekennzeichnet, daß** die Reaktion in Gegenwart eines Katalysators (iv) durchgeführt wird.

5. Zwischenprodukt nach einem der vorstehenden Ansprüche, **dadurch gekennzeichnet, daß** das Antioxidationsmittel (iii) ein sterisch gehindertes Phenol ist, vorzugsweise ausgewählt aus der Gruppe bestehend aus Dibutylhydroxytoluol, Octadecyl-3-[3,5-Di-tert-butyl-4-hydroxyphenyl]¬propionat, 3-(3,5-Di-tert-butyl-4-hydroxyphenyl)propionsäuremethylester, Penta¬erythrit-Tetrakis(3-(3,5-di-tert-butyl-4-hydroxyphenyl)propionat), oder eine Mischung davon ist, wobei das Antioxidationsmittel vorzugsweise 3-(3,5-Di-tert-butyl-4-hydroxyphenyl)propionsäuremethylester ist.

6. Zwischenprodukt nach einem der beiden vorstehenden Ansprüche 4 oder 5 wobei der Katalysator (iii) mindestens eine ionische Flüssigkeit umfaßt, wobei die ionische Flüssigkeit vorzugsweise ein heterocyclisches Kation oder ein Ammoniumkation, noch bevorzugter ein Kation, ausgewählt aus der Gruppe bestehend aus Pyridiniumionen, ist, Pyrazolinium-, Pyrazolium-Ionen, Imidazolinium, Imid-Azolium und Ammonium sowie ein entsprechendes Anion, das vorzugsweise aus der Gruppe der Halogenide, bevorzugter aus der Gruppe bestehend aus Chlorid, Bromid und lodid, bevorzugter aus der Gruppe bestehend aus Chlorid, Bromid und lodid, bevorzugter aus der Gruppe bestehend aus Chlorid, Bromid und lodid, ausgewählt ist; wobei die mindestens eine ionische Flüssigkeit bevorzugter aus der Gruppe ausgewählt ist, die aus 1-Ethyl-3-methylimidazoliumbromid (EMIM-Br), 1-Benzyl-3-methylimidazoliumchlorid (BEMIM-Cl) besteht, 1-Butyl-1-methylpiperidiniumchlorid (BMPM-Cl), 1-Butyl-1-methylpiperidiniumacetat (BMPM-Acetat), 1-Ethyl-2,3-dimethyl¬imidazoliumbromid (EDMIM-Br) und 1-(2-Hydroxyethyl)-3-methylimidazoliumchlorid (HEMIM-Cl).

7. Zwischenprodukt nach einem der vorhergehenden Ansprüche, wobei das Diisocyanat ein aromatisches Diisocyanat, vorzugsweise ausgewählt aus der Gruppe bestehend aus Toluoldiisocyanat (TDI), Diphenylmethandiisocyanat (MDI) und 1,5-Naphthylendiisocya-nat (NDI), oder ein Gemisch davon ist.

8. Zwischenprodukt nach einem der vorhergehenden Ansprüche, wobei das Diepoxid ein Polyglycidylether, vorzugsweise ein Diglycidylether, ist.

9. Verfahren zur Herstellung eines Zwischenproduktes bestehend aus einer Zubereitung, die ein thermoplastisches Polymer enthält, dass durch Umsetzung mindestens der Komponenten (i) bis (ii) hergestellt wurde:
(i) eine Polyisocyanat-Zusammensetzung, die mindestens ein Diisocyanat enthält;
ii) eine Epoxidzusammensetzung, die mindestens ein Diepoxid umfasst;
in Gegenwart eines Antioxidationsmittels (iii).

10. Verfahren nach dem vorstehenden Anspruch 9, wobei ferner ein Katalysator (iv) vorhanden ist.

11. Thermoplastisches Polymer, hergestellt nach einem der beiden vorstehenden Ansprüche 9 oder 10.

12. Verwendung eines Zwischenprodukts nach einem der Ansprüche 1 bis 8 oder des thermoplastischen Polymers, hergestellt nach einem der Ansprüche 9 bis 10, zur Herstellung einer Faser, einer Folie oder eines Formkörpers durch Aufschäumen, Spritzgießen, Kalandrieren, Pulversintern, Lasersintern, Schmelzpressen oder Extrusion; oder als Modifizierungsmittel für Polymere
